(19) Europäisches Patentamt / European Patent Office / Office européen des brevets

(11) **EP 3 070 869 B1**

(12) **FASCICULE DE BREVET EUROPEEN**

(45) Date de publication et mention de la délivrance du brevet:
**28.06.2017 Bulletin 2017/26**

(51) Int Cl.:
*H04L 1/24* (2006.01) *H04L 1/18* (2006.01)
*H04L 12/26* (2006.01)

(21) Numéro de dépôt: **16156315.0**

(22) Date de dépôt: **18.02.2016**

(54) **PROCÉDÉ DE SURVEILLANCE D'UNE COMMUNICATION ENTRE UN ÉQUIPEMENT ÉMETTEUR ET UN ÉQUIPEMENT RÉCEPTEUR**

VERFAHREN ZUR ÜBERWACHUNG EINER KOMMUNIKATION ZWISCHEN EINEM SENDE- UND EINEM EMPFANGSGERÄT

METHOD FOR MONITORING COMMUNICATION BETWEEN A TRANSMITTER AND A RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2015 FR 1552093**

(43) Date de publication de la demande:
**21.09.2016 Bulletin 2016/38**

(73) Titulaire: **Schneider Electric Industries SAS**
**92500 Rueil-Malmaison (FR)**

(72) Inventeurs:
• TARDIVON, Alain
  **16170 Gourville (FR)**
• ROGER, Mireille
  **16600 Ruelle-sur-Touvre (FR)**
• DALLET, Hervé
  **16800 Soyaux (FR)**
• CHAUVET, Francis
  **16440 Mouthiers (FR)**

(74) Mandataire: **Dufresne, Thierry**
**Schneider Electric Industries SAS**
**Service Propriété Industrielle**
**35 rue Joseph Monier - CS 30323**
**92506 Rueil-Malmaison Cedex (FR)**

(56) Documents cités:
**EP-A1- 2 887 585** **US-A1- 2008 130 542**
**US-A1- 2012 106 369**

**Description**

**Domaine technique de l'invention**

La présente invention se rapporte à un procédé de surveillance d'une communication entre un équipement émetteur et un équipement récepteur.

**Etat de la technique**

Dans le milieu industriel, la communication entre les équipements se doit d'être fiable car elle participe au contrôle-commande des machines. Soit la communication affiche intrinsèquement un niveau élevé de fiabilité, ce qui peut s'avérer difficile à obtenir, soit elle doit être surveillée afin de détecter les erreurs de communication entre les équipements. Dans ce deuxième cas, il s'agit de pouvoir émettre, en plus des trames de commande échangées entre les équipements, des trames de diagnostic pour informer, avec un niveau de fiabilité défini, de l'état de la communication. L'émission de trames de diagnostic permet de détecter les erreurs de communication et ainsi d'alerter de ces erreurs. Pour permettre de détecter une erreur de communication avec une fiabilité maximale, la solution la plus aisée consiste à émettre des trames de diagnostic à une fréquence fixe adaptée à la fréquence d'émission des trames de commande la plus élevée. Cependant, l'émission de trames à cette fréquence fixe entraîne une forte occupation, voire une saturation de la liaison de communication et une surconsommation d'énergie électrique pour les équipements impliqués.

Par ailleurs, au sein d'une même application, la fréquence d'émission des trames de commande n'est pas forcément fixe. En phase de réglage, la fréquence d'émission peut être élevée alors qu'elle peut être faible en phase de fonctionnement normal. La plupart des protocoles de surveillance de communication entre deux équipements ne tiennent pas compte de ces différents aspects.

La demande de brevet US2012/106369 décrit par ailleurs une méthode de surveillance de communication.

Le but de l'invention est de proposer un procédé de surveillance d'une communication entre un équipement émetteur et un équipement récepteur, qui permet d'adapter en temps réel l'émission des trames de diagnostic à la fréquence d'émission des trames de commande et d'optimiser la fréquence d'émission des trames de diagnostic en vue d'éviter de saturer la liaison de communication et d'entraîner une surconsommation d'énergie électrique, tout en garantissant une fiabilité élevée sur l'état de la communication.

**Exposé de l'invention**

Ce but est atteint par un procédé selon la revendication 1. La solution de l'invention permet ainsi de tenir compte du fait que les trames de commande ne sont pas forcément émises à fréquence fixe et d'adapter l'émission des trames de diagnostic à la fréquence d'émission des trames de commande. Lors d'une variation importante de cette fréquence d'émission, si aucune trame de diagnostic n'a été émise entre les deux trames de commande, l'instant d'émission de la prochaine trame de diagnostic tiendra compte de cet aspect.

Selon une particularité, le procédé comporte un mode de repli dans lequel la durée minimale prédéterminée entre l'émission de deux trames de commande est appliquée au moins pour la détermination de l'instant d'émission de la trame de diagnostic de rang 0.

Selon une autre particularité, le mode de repli est maintenu pour les trames de diagnostic de rang 0 suivantes tant qu'une valeur moyenne de fiabilité minimale reste inférieure à ladite valeur de fiabilité prédéfinie.

Selon une autre particularité, le terme $\Delta t diag$ est déterminé à partir de la relation suivante :

$$\Delta t diag = \Delta t \frac{\mathrm{Ln(Fiab)}}{\mathrm{Ln}(1 - \tau_{\text{échec}})}$$

Avec :

- Fiab qui correspond à la valeur de fiabilité prédéfinie,
- $\tau_{\text{échec}}$ qui correspond à un taux de probabilité d'apparition d'un échec de communication entre deux trames de commande.
- Ln représente le logarithme Népérien.

Par ailleurs, dans un environnement industriel, des mouvements de machine, des perturbations électromagnétiques, des déplacements de masse métallique, des mouvements de personnes dans la zone d'échange de données, la présence d'autres équipements émetteurs, sont susceptibles de créer des perturbations aléatoires dans l'échange de données entre l'équipement émetteur et l'équipement récepteur. Ces phénomènes sont notamment susceptibles de perturber la communication entre l'équipement émetteur et l'équipement récepteur.

Selon une autre particularité, le procédé comporte une étape de révision du taux de probabilité d'apparition d'un échec de communication lorsqu'une trame de commande n'a pas été reçue ou acquittée par l'équipement récepteur.

Selon une autre particularité, le procédé comporte une étape de limitation à une valeur maximale de la durée entre deux trames de diagnostic successives, lorsque la durée entre un premier instant d'émission d'une trame de diagnostic de rang x et un deuxième instant d'émission d'une trame de diagnostic de rang x dépasse ladite valeur maximale.

## Brève description des figures

D'autres caractéristiques et avantages vont apparaître dans la description détaillée qui suit faite en regard des dessins annexés dans lesquels :

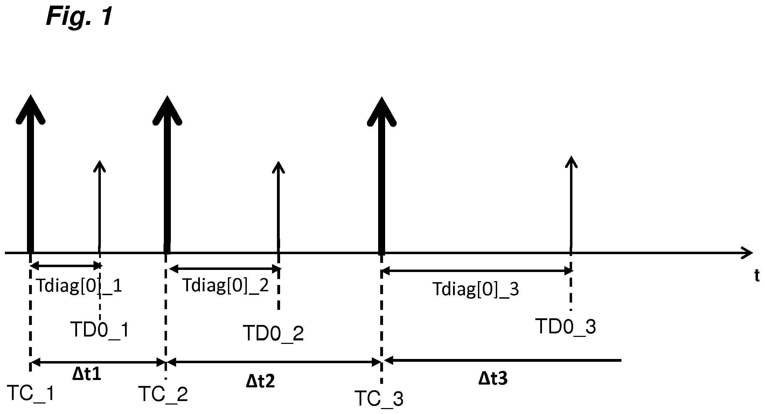

- les figures 1 à 5 représentent des diagrammes temporels illustrant les différents principes de fonctionnement de l'invention.

## Description détaillée d'au moins un mode de réalisation

Dans la suite de la description :

- la notation « $TC\_i$ » désigne à la fois une trame de commande et l'instant d'émission de cette trame de commande,

- la notation « $TDx\_i$ » désigne à la fois une trame de diagnostic et l'instant d'émission de cette trame de diagnostic.

Le procédé de l'invention s'applique à une installation comprenant au moins un équipement émetteur et un équipement récepteur connectés entre eux à travers un réseau de communication de type filaire ou sans-fil. Bien entendu, chacun de ces équipements pourra exercer les deux fonctions d'émetteur et de récepteur.

Dans cette installation, l'équipement émetteur envoie des trames de commande à l'équipement récepteur, par exemple pour le contrôle-commande d'une machine. La durée $\Delta t$ entre l'émission de la trame de commande $TC\_i$ et la trame de commande suivante $TC\_i+1$ (i étant un nombre entier allant de 1 à n et définissant le rang de la trame de commande, n étant un nombre entier supérieur ou égal à 1) n'est pas forcément fixe.

Le procédé de l'invention consiste à surveiller la communication entre l'équipement émetteur et l'équipement récepteur. Il consiste en l'émission de trames de diagnostic $TDx\_i$ (x étant un nombre entier supérieur à 0 et définissant le rang de la trame de diagnostic après la trame de commande $TC\_i$) dédiées à la surveillance de la communication. L'objectif de la surveillance est de connaître l'état de la communication avant la prochaine trame de commande $TC\_i$ pour s'assurer que celle-ci ait le maximum de chance d'être transmise et reçue sans échec. Pour cela, au moins une trame de diagnostic $TDx\_i$ doit être émise avant la probable prochaine émission d'une trame de commande $TC\_i$. De manière générale, l'instant d'émission de la première trame de diagnostic $TD0\_i$ venant après une trame de commande $TC\_i$ s'exprime par la relation suivante :

$$TD0\_i = TC\_i + Tdiag[0]\_i$$

Dans laquelle $TD0\_i$ correspond à l'instant d'émission de la trame de diagnostic $TD0\_i$ et avec :

$$Tdiag[0]\_i = \Delta t - \Delta tdiag \qquad (1)$$

Dans laquelle :

- $\Delta t$ est une durée dont la valeur diffère selon le cas de fonctionnement mis en oeuvre et décrit ci-dessous,

- $\Delta tdiag$ est une durée à respecter pour garantir la fiabilité prédéfinie sur l'état de la communication et s'exprime de la manière suivante :

EP 3 070 869 B1

$$\Delta \text{tdiag} = \Delta t \frac{\text{Ln(Fiab)}}{\text{Ln}(1-\tau_{\text{échec}})} \qquad (2)$$

Dans laquelle :

- Fiab correspond à une valeur de fiabilité prédéfinie pour la communication, par exemple 99%,
- $\tau_{\text{échec}}$ correspond au taux de probabilité d'apparition d'un échec de communication entre deux émissions de trames de commande TC_i.

Cependant, dans le milieu industriel, les différentes phases d'un processus impliquent un schéma de communication non stable. La fréquence d'émission des trames de commande n'est donc pas forcément fixe. L'invention vise à tenir compte de cet aspect dans la gestion des trames de diagnostic.

Afin de prendre en compte la variation des instants d'émission des trames de commande, le procédé de l'invention permet de redéfinir en temps réel l'instant d'émission de la trame de diagnostic initiale TD0_i d'une série de trames de diagnostic suivant l'émission d'une trame de commande.

En référence aux figures annexées, nous définissons une application dans laquelle :

- L'équipement émetteur émet n trames de commande TC_i (pour i allant de 1 à n) à destination de l'équipement récepteur,

- Une durée $\Delta ti$ s'écoule entre la trame de commande TC_i et la trame de commande TC_i+1, une durée $\Delta t\_i+1$ s'écoule entre la trame de commande TC_i+1 et la trame de commande TC_i+2.

## 1. Premier exemple de fonctionnement (figure 1)

Si au moins une trame de diagnostic a été émise lors de la durée $\Delta ti$, l'instant d'émission de la prochaine trame de diagnostic TD0_i après la trame de commande TC_i+1 est déterminé à partir de la formule (1) définie ci-dessus dans laquelle $\Delta t$ prend la valeur de $\Delta ti$.

Sur la figure 1, on peut ainsi voir que la trame de diagnostic TD0_1 a été émise pendant la durée $\Delta t1$. Au cours de la durée suivant la trame de commande TC_2, la trame de diagnostic TD0_2 est émise après la durée Tdiag[0]_2 calculée à l'aide de la durée $\Delta t1$.

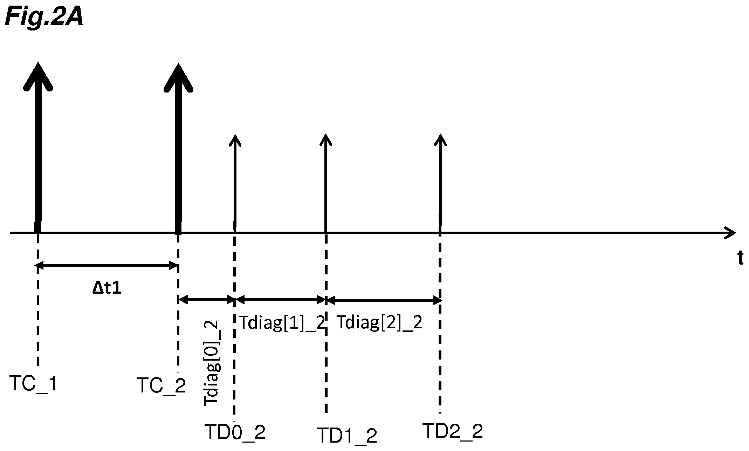

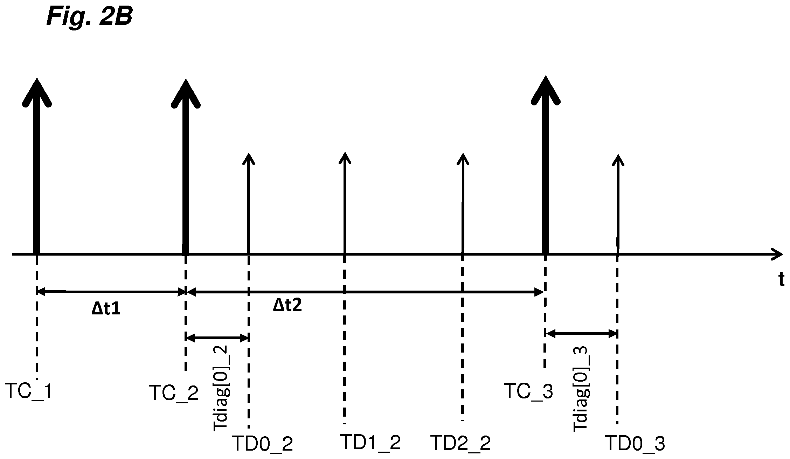

## 2. Deuxième exemple de fonctionnement (figures 2A et 2B)

Si aucune trame de diagnostic n'a été émise lors de la durée $\Delta ti$, l'instant d'émission de la prochaine trame de diagnostic TD0_i+1 après la prochaine trame de commande TC_i+1 est déterminé à partir de la formule définie ci-dessus dans laquelle $\Delta t$ prend une valeur minimale $\Delta tmin$ prédéfinie, permettant de s'assurer de l'émission d'une trame de diagnostic avant la prochaine trame de commande TC_i+2. Dans cette situation, on dira que le procédé de surveillance passe dans un mode de repli.

Sur les figures 2A et 2B, on peut voir qu'aucune trame de diagnostic n'a été émise durant la durée $\Delta t1$. Par conséquent, durant la durée suivante $\Delta t2$, l'instant d'émission de la trame de diagnostic TD0_2 qui doit suivre la trame de commande TC_2 est déterminé à partir de la durée $\Delta tmin$.

De manière avantageuse, le mode de repli peut être conservé pour l'émission de plusieurs trames de commande successives. C'est le cas sur la figure 2B, les instants d'émission des trames de diagnostic TD0_2 et TD0_3 sont calculés à partir de la durée $\Delta tmin$.

Comme le mode normal de fonctionnement, le mode de repli doit se dérouler sans saturer la liaison de communication et sans entraîner une surconsommation d'énergie électrique.

Préférentiellement, dans ce mode de repli, le taux de fiabilité peut être modifié pour prendre une valeur de repli. Il existe une valeur de fiabilité optimale ($Fiab_{repli}$) telle que le nombre total des trames sur l'ensemble des séquences de repli soit minimal. En effet une valeur élevée de $Fiab_{repli}$ permet de n'avoir qu'un nombre restreint de séquences de repli mais génère un nombre de trames de diagnostic important. A contrario, une valeur faible de $Fiab_{repli}$ permet de réduire le nombre de trames de diagnostic par séquence de repli, mais génère un nombre important de séquences de repli.

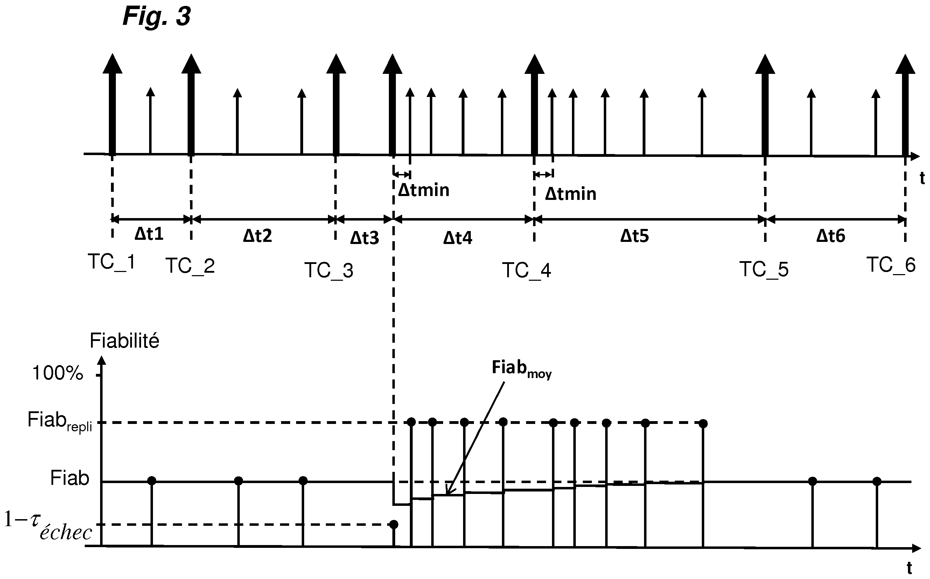

La figure 3 illustre le principe de fonctionnement du mode de repli. Le deuxième diagramme de cette figure montre les valeurs de fiabilité prises ponctuellement et une courbe de variation de la valeur moyenne de la fiabilité minimale. En détaillant cette figure, on a les séquences suivantes :

- Sur les durées $\Delta t1$ et $\Delta t2$, au moins une trame de diagnostic a été émise entre deux trames de commande. La fiabilité minimale a une valeur moyenne Fiab$_{moy}$ égale à celle (Fiab) qui a été prédéfinie pour la fiabilité.

- Sur la durée Δt3, aucune trame de diagnostic n'a été émise entre les deux trames de commande. Ponctuellement, la fiabilité de la communication tombe à une valeur égale à 1- $\tau_{échec}$ et la fiabilité minimale a alors une valeur moyenne Fiab$_{moy}$ qui diminue et devient inférieure à ladite valeur prédéfinie (Fiab).

- Sur les durées Δt4 et Δt5, l'équipement émetteur passe en mode de repli en émettant des trames de diagnostic dont les instants d'émission sont déterminés à partir d'une deuxième valeur prédéfinie de fiabilité, notée Fiab$_{repli}$, qui est supérieure à la première valeur prédéfinie de fiabilité Fiab. Ainsi la valeur moyenne de fiabilité minimale remonte. Le processus de repli se poursuit jusqu'à ce que la valeur moyenne de la fiabilité minimale retrouve le niveau de la valeur prédéfinie Fiab.

- Sur la durée Δt6, les émissions des trames de diagnostic reprennent selon le processus normal en tenant compte de la valeur prédéfinie Fiab.

Selon l'invention, tant qu'une nouvelle trame de commande TC_i n'a pas été envoyée par l'équipement émetteur, celui-ci envoie, après la trame de diagnostic initiale, d'autres trames de diagnostic à l'équipement récepteur. Préférentiellement, les trames de diagnostic sont émises à une fréquence variable, permettant d'éviter une saturation de la communication et une surconsommation d'énergie de la part des équipements.

Les instants d'émission des trames de diagnostic, qui suivent la première trame de diagnostic émise TD0_i, sont déterminés à partir d'une fonction croissante comme par exemple une suite géométrique choisie pour obtenir des instants d'émission séparés d'une durée variable. La fonction croissante permettant de déterminer les instants d'émission des trames de diagnostic TDx_i (avec x supérieur ou égal à 1) est par exemple la suite géométrique suivante :

$$TDx\_i=TDx\_i\text{-}1+Tdiag[x]\_i$$

$$Tdiag[x]\_i= r(x) \times Tdiag\ [x\text{-}1]\_i \qquad\qquad (3)$$

Dans laquelle r(x) correspond à la raison de la suite.

Cette fonction croissante permet de faire évoluer la durée entre deux trames de diagnostic, avant l'émission de la prochaine trame de commande, tout en assurant une fiabilité maximale (proche de 100%). La durée entre la dernière trame de commande et la prochaine trame de commande augmentant, l'occurrence d'un échec de communication diminue puisque ce taux de fiabilité est considéré constant entre deux trames de commande. Aussi, même si les trames de diagnostic sont de plus en plus éloignées les unes des autres, la fiabilité sur l'état de la communication reste élevée, proche de 100%. Tant qu'une trame de commande n'a pas été émise par l'équipement émetteur, des trames de diagnostic sont émises aux instants d'émission déterminés grâce à la relation (3) ci-dessus.

Après chaque émission de trame de commande, le procédé de diagnostic est réinitialisé et l'instant d'émission de la prochaine trame de diagnostic est déterminé grâce à la relation (1) ci-dessus et les instants suivants sont déterminés grâce à la relation (3).

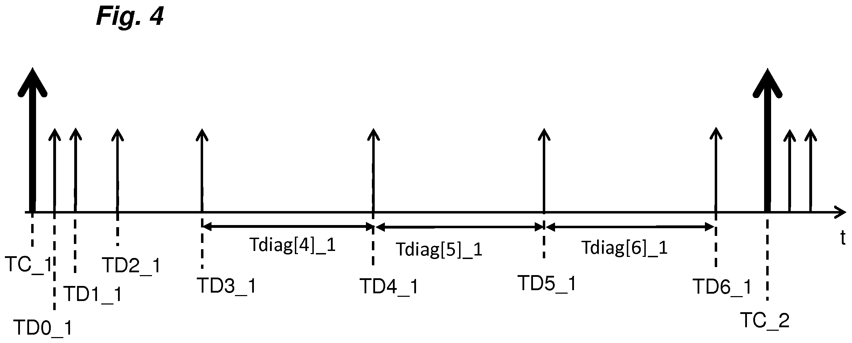

Avantageusement, si la durée entre deux trames de diagnostic devient trop longue, celle-ci peut être plafonnée à une valeur déterminée. Cette valeur sera par exemple la période moyenne d'émission des trames de commande. La figure 4 illustre une telle solution dans laquelle les trames de diagnostic TD4_1, TD5_1 et TD6_1 sont émises à une période fixe, celle-ci correspondant à une valeur maximale, qui peut être mémorisée par exemple par l'équipement émetteur.

Par ailleurs, lorsque l'équipement émetteur et l'équipement récepteur communiquent dans un environnement de communication instable, par exemple dans un milieu industriel, des échecs de communication sont fréquents. Pour tenir compte des échecs possibles de communication, le procédé de l'invention permet, de manière avantageuse, de réviser le taux de probabilité d'apparition d'un échec de communication. Combiné au mode de détermination des trames de diagnostic décrit ci-dessus, la révision du taux de probabilité d'apparition d'un échec de communication permettra d'optimiser encore plus le nombre de trames de diagnostic émises.

Le taux d'échec $\tau_{échec}$ reflète le taux de trames de commande incorrectement reçues.

Il est par exemple connu de faire acquitter la réception d'une trame de commande par l'équipement récepteur pour s'assurer d'une bonne transmission des trames de commande. L'équipement émetteur est alors averti de la réception ou de la non-réception de chaque trame de commande TC_i et peut lancer l'action qui convient. Il est également bien connu que l'équipement émetteur fasse plusieurs tentatives d'émission d'une trame de commande avant de conclure au non-acquittement de la trame de commande, ceci afin de masquer les ruptures de communication intempestives de très faible durée. Le calcul du taux d'échec $\tau_{échec}$ peut alors par exemple s'appuyer sur ce processus d'acquittement en mesurant le nombre de trames acquittées par rapport au nombre de trames émises.

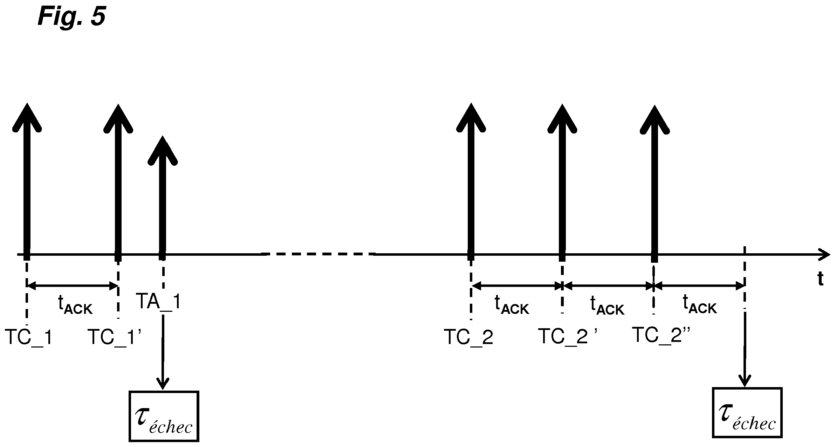

La figure 5 illustre le principe de mise à jour du taux de probabilité d'apparition d'un échec de communication :

- L'équipement émetteur émet une première trame de commande TC_1 à destination de l'équipement récepteur.

- Après une durée déterminée $t_{ACK}$, l'équipement émetteur n'a reçu aucune trame d'acquittement de cette première trame de commande et émet de nouveau une trame de commande TC_1'.

- L'équipement émetteur reçoit une trame d'acquittement TA_1 de cette dernière trame de commande TC_1'.

- L'équipement émetteur diminue le taux de probabilité d'apparition d'un échec $\tau_{échec}$.

- L'équipement émetteur procède à plusieurs tentatives d'émission d'une nouvelle trame de commande TC_2, TC_2', TC_2" sans recevoir de trame d'acquittement.

- Après la durée $t_{ACK}$, l'équipement émetteur augmente le taux de probabilité d'apparition d'un échec $\tau_{échec}$.

Après chaque émission d'une trame de commande, le taux d'échec $\tau_{échec}$ peut ainsi être réactualisé.

Par ailleurs, comme décrit ci-dessus, le taux de probabilité d'apparition d'un échec de communication est défini en relation avec $\Delta t$diag dans l'expression suivante :

$$\Delta \mathrm{tdiag} = \Delta \mathrm{t}\frac{\mathrm{Ln(Fiab)}}{\mathrm{Ln}(1-\tau_{échec})} \qquad (2)$$

Dans laquelle :

- $\Delta t$ suit la valeur déterminée selon le cas de fonctionnement décrit ci-dessus,

- Fiab correspond à une valeur de fiabilité prédéfinie pour la communication, par exemple 99%,

- $\tau_{échec}$ correspond à un taux de probabilité d'apparition d'un échec de communication entre deux émissions de trames de commande TC_i.

La révision du taux de probabilité d'apparition d'un échec de communication aura donc également un impact sur l'optimisation du nombre de trames de diagnostic émises.

L'invention présente ainsi plusieurs avantages, notamment :

- D'adapter la fréquence d'émission des trames de diagnostic à la fréquence d'émission des trames de commande,

- D'optimiser le nombre de trames de diagnostic émises, que ce soit en adaptant le calcul des trames de diagnostic et/ou en révisant le taux de probabilité d'apparition d'un échec de communication, tout en garantissant une fiabilité élevée sur l'état de la communication,

- De garantir une fiabilité sur l'état de la communication proche de 100%, tout en évitant de saturer la liaison de communication et d'entraîner une surconsommation d'énergie électrique,

- D'être simple à mettre en oeuvre et de pouvoir s'adapter à des réseaux de communication de type filaire ou sans-fil.

**Revendications**

1. Procédé de surveillance d'une communication entre un équipement émetteur et un équipement récepteur, ledit équipement émetteur transmettant des trames de commande à l'équipement récepteur, ledit procédé comportant les étapes suivantes :

   - émission par l'équipement émetteur de n trames de commande TC_i à destination de l'équipement récepteur, i étant un nombre entier allant de 1 à n et définissant le rang de chaque trame de commande, n étant un nombre entier supérieur à 1,

- Rédéfinition en temps réel d'un instant d'émission d'une trame de diagnostic de rang 0 après l'émission d'une trame de commande TC_i, ledit instant d'émission de ladite trame de diagnostic étant déterminé de la manière suivante :

$$TD0\_i=TC\_i+Tdiag[0]\_i$$

- dans laquelle TD0_i correspond à l'instant d'émission de la trame de diagnostic de rang 0 suivant la trame de commande TC_i et avec :

$$Tdiag[0]\_i = \Delta t - \Delta tdiag$$

- dans laquelle :

• $\Delta t$ correspond :

◦ à la durée séparant la trame de commande TC_i-1 et la trame de commande TC_i si i≥2 et si au moins une trame de diagnostic avait déjà été émise pendant ladite durée séparant les deux trames de commande, ou
◦ à une durée minimale prédéterminée entre l'émission de deux trames de commande si i = 1 ou si aucune trame de diagnostic n'a été émise pendant ladite durée séparant la trame de commande TC_i-1 et la trame de commande TC_i,

• $\Delta tdiag$ correspond à une durée déterminée à partir de la durée $\Delta t$, d'une valeur de fiabilité prédéfinie sur l'état de la communication et d'un taux de probabilité d'apparition d'un échec de communication entre deux trames de commande,

- émission par l'équipement émetteur de ladite trame de diagnostic à l'instant d'émission déterminé, à destination de l'équipement récepteur,
- détermination à partir d'une fonction croissante des instants d'émission des trames de diagnostic TDx_i suivantes de rang x,
- émission desdites trames de diagnostic de rang x par l'équipement émetteur à destination de l'équipement récepteur.

2. Procédé selon la revendication 1, comportant, en outre, un mode de repli dans lequel la durée minimale prédéterminée entre l'émission de deux trames de commande est appliquée au moins pour la détermination de l'instant d'émission de la trame de diagnostic de rang 0.

3. Procédé selon la revendication 2, dans lequel le mode de repli est maintenu pour les trames de diagnostic de rang 0 suivantes tant qu'une valeur moyenne de fiabilité minimale reste inférieure à ladite valeur de fiabilité prédéfinie.

4. Procédé selon la revendication 1, dans lequel le terme $\Delta tdiag$ est déterminé à partir de la relation suivante :

$$\Delta tdiag = \Delta t \frac{Ln(Fiab)}{Ln(1 - \tau_{\text{échec}})}$$

Avec :

- Fiab qui correspond à la valeur de fiabilité prédéfinie,
- $\tau_{\text{éch c}}$ qui correspond à un taux de probabilité d'apparition d'un échec de communication entre deux trames de commande.

5. Procédé selon la revendication 4, comportant, en outre, une étape de révision du taux de probabilité d'apparition d'un échec de communication lorsqu'une trame de commande n'a pas été reçue ou acquittée par l'équipement récepteur.

**6.** Procédé selon la revendication 1, comportant, en outre, une étape de limitation à une valeur maximale de la durée entre deux trames de diagnostic successives, lorsque la durée entre un premier instant d'émission d'une trame de diagnostic de rang x et un deuxième instant d'émission d'une trame de diagnostic de rang x dépasse ladite valeur maximale.

**Patentansprüche**

**1.** Verfahren zur Überwachung einer Kommunikation zwischen einem Sendegerät und einem Empfangsgerät, wobei das Sendegerät Steuerrahmen an das Empfangsgerät sendet, wobei das Verfahren die folgenden Schritte umfasst:

- Senden, durch das Sendegerät, von n Steuerrahmen $TC\_i$ an das Empfangsgerät, wobei i eine ganze Zahl von 1 bis n ist und den Rang jedes Steuerrahmens definiert, wobei n eine ganze Zahl größer als 1 ist,
- Neudefinition, in Echtzeit, eines Sendemoments eines Diagnoserahmens des Rangs 0 nach dem Senden eines Steuerrahmens $TC\_i$, wobei der Sendemoment des Diagnoserahmens auf folgende Weise bestimmt wird:

$$TD0\_i = TC\_i + Tdiag[0]\_i$$

- wobei $TD0\_i$ einem Sendemoment des Diagnoserahmens des Rangs 0 entspricht, der dem Steuerrahmen $TC\_i$ folgt, und wobei:

$$Tdiag[0]\_i = \Delta t - \Delta tdiag$$

- wobei:

  • $\Delta t$ entspricht:

    ∘ der Dauer, die den Steuerrahmen $TC\_i\text{-}1$ und den Steuerrahmen $TC\_i$ trennt, wenn i≥2, und wenn bereits mindestens ein Diagnoserahmen während der Dauer gesendet wurde, welche die beiden Steuerrahmen trennt, oder
    ∘ der vorherbestimmten minimalen Dauer zwischen dem Senden der beiden Steuerrahmen, wenn i = 1, oder wenn kein Diagnoserahmen während der Dauer gesendet wurde, die den Steuerrahmen $TC\_i\text{-}1$ und den Steuerrahmen $TC\_i$ trennt,

  • $\Delta tdiag$ einer Dauer entspricht, die aus der Dauer $\Delta t$, einem vordefinierten Zuverlässigkeitswert in Bezug auf den Kommunikationszustand und einem Wahrscheinlichkeitsgrad des Auftretens eines Kommunikationsausfalls zwischen zwei Steuerrahmen bestimmt wird,

- Senden, durch das Sendegerät, des Diagnoserahmens in dem bestimmten Sendemoment an das Empfangsgerät,
- Bestimmung folgender Diagnoserahmen $TDx\_i$ des Rangs x aus einer steigenden Funktion der Sendemomente,
- Senden der Diagnoserahmen des Rangs x durch das Sendegerät an das Empfangsgerät.

**2.** Verfahren nach Anspruch 1, ferner umfassend einen Notfallmodus, in dem die vorherbestimmte minimale Dauer zwischen dem Senden von zwei Steuerrahmen mindestens auf die Bestimmung des Sendemoments des Diagnosrahmens des Rangs 0 angewendet wird.

**3.** Verfahren nach Anspruch 2, wobei der Notfallmodus für die folgenden Diagnoserahmen des Rangs 0 aufrechterhalten wird, solange ein Mittelwert der minimalen Zuverlässigkeit unter dem vordefinierten Zuverlässigkeitswert bleibt.

**4.** Verfahren nach Anspruch 1, wobei der Term $\Delta tdiag$ aus der folgenden Beziehung bestimmt wird:

$$\Delta \text{tdiag} = \Delta t \frac{Ln(Fiab)}{Ln(1 - \tau_{\acute{e}chec})}$$

wobei:

- Fiab dem vordefinierten Zuverlässigkeitswert entspricht,
- $\tau_{\acute{e}chec}$ einem Wahrscheinlichkeitsgrad des Auftretens eines Ausfalls der Kommunikation zwischen zwei Steuerrahmen entspricht.

5. Verfahren nach Anspruch 4, ferner umfassend einen Schritt der Revision des Wahrscheinlichkeitsgrads des Auftretens eines Ausfalls der Kommunikation, wenn ein Steuerrahmen von dem Empfangsgerät nicht empfangen oder quittiert wurde.

6. Verfahren nach Anspruch 1, ferner umfassend einen Schritt der Begrenzung der Dauer zwischen zwei aufeinanderfolgenden Diagnoserahmen auf einen maximalen Wert, wenn die Dauer zwischen einem ersten Sendemoment eines Diagnoserahmens des Rangs x und einem zweiten Sendemoment eines Diagnoserahmens des Rangs x den maximalen Wert überschreitet.

**Claims**

1. Method for monitoring a communication between a transmitting device and a receiving device, said transmitting device transmitting control frames to the receiving device, said method comprising the following steps:

- transmission by the transmitting device of n control frames TC_i to the receiving device, i being an integer number ranging from 1 to n and defining the rank of each control frame, n being an integer number greater than 1,
- Redefinition, in real time, of an instant of transmission of a diagnostic frame of rank 0 after the transmission of a control frame TC_i, said instant of transmission of said diagnostic frame being determined as follows:

$$\text{TD0\_i} = \text{TC\_i} + \text{Tdiag[0]\_i}$$

- in which TD0_i corresponds to the instant of transmission of the diagnostic frame of rank 0 following the control frame TC_i and with:

$$\text{Tdiag[0]\_i} = \Delta t - \Delta \text{tdiag}$$

- in which:

• $\Delta t$ corresponds:

  ○ to the time separating the control frame TC_i-1 and the control frame TC_i if i≥2 and if at least one diagnostic frame had already been transmitted during said time separating the two control frames, or
  ○ to a predetermined minimum time between the transmission of two control frames if i = 1 or if no diagnostic frame has been transmitted during said time separating the control frame TC_i-1 and the control frame TC_i,

• $\Delta \text{tdiag}$ corresponds to a time to be determined based on time $\Delta t$, on a predefined reliability value related to the state of the communication, and on a rate of probability of occurrence of a communication failure between two control frames,

- transmission by the transmitting device of said diagnostic frame at the determined transmission instant, to the receiving device,
- determination from an increasing function of the instants of transmission of the following diagnostic frames TDx_i of rank x;
- transmission of said diagnostic frames of rank x by the transmitting device to the receiving device.

2. Method according to Claim 1, comprising, additionally, a fallback mode in which the predetermined minimum time between the transmission of two control frames is applied at least for the determination of the instant of transmission of the diagnostic frame of rank 0.

3. Method according to Claim 2, wherein the fallback mode is maintained for the subsequent diagnostic frames of rank 0 as long as an average minimum reliability value remains less than said predefined reliability value.

4. Method according to Claim 1, wherein the term Δtdiag is determined from the following relationship:

$$\Delta \text{tdiag} = \Delta t \frac{\text{Ln(Fiab)}}{\text{Ln}(1 - \tau_{\text{fail}})}$$

With:

- Fiab which corresponds to the predefined reliability value,
- $\tau_{\text{fail}}$ which corresponds to a rate of probability of occurrence of a communication failure between two control frames.

5. Method according to Claim 4, comprising, additionally, a step of revision of the rate of probability of occurrence of a communication failure when a control frame has not been received or acknowledged by the receiving device.

6. Method according to Claim 1, comprising, additionally, a step of limitation to a maximum value of the time between two successive diagnostic frames, when the time between a first instant of transmission of a diagnostic frame of rank x and a second instant of transmission of a diagnostic frame of rank x exceeds said maximum value.

EP 3 070 869 B1

**Fig. 1**

EP 3 070 869 B1

*Fig.2A*

TC_1  Δt1  TC_2  Tdiag[0]_2  Tdiag[1]_2  Tdiag[2]_2  t

TD0_2  TD1_2  TD2_2

12

Fig. 2B

EP 3 070 869 B1

*Fig. 3*

TC_1  TC_2  TC_3  TC_4  TC_5  TC_6

Δt1  Δt2  Δt3  Δt4  Δt5  Δt6

Δtmin  Δtmin

t

Fiabilité

100%

$Fiab_{repli}$

Fiab

$1-\tau_{échec}$

$Fiab_{moy}$

t

*Fig. 4*

**Fig. 5**

$t$

$t_{ACK}$

TC_2''

$t_{ACK}$

TC_2'

$t_{ACK}$

TC_2

$\tau_{échec}$

TA_1

$\tau_{échec}$

$t_{ACK}$

TC_1'

TC_1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012106369 A